# EUROPÄISCHE PATENTSCHRIFT

(11) **EP 1 681 194 B1**
(45) Veröffentlichungstag und Bekanntmachung des Hinweises auf die Patenterteilung: **12.05.2010**
(21) Anmeldenummer: 05028232.6
(22) Anmeldetag: 22.12.2005
(51) Int. Cl.: B60J 7/05

(54) **Fahrzeug-Schiebedach mit einer bewegbaren Wasserrinne**
Sliding roof for vehicle with a movable gutter
Toit ouvrant pour véhicule avec une gouttière amovible

(30) Priorität: 14.01.2005 DE 102005001869
(43) Veröffentlichungstag der Anmeldung: 19.07.2006
(73) Patentinhaber: Bayerische Motoren Werke Aktiengesellschaft, 80809 München (DE)
(72) Erfinder: Seibt, Klaus, 85764 Oberschleißheim (DE); Minatti, Johann, 80935 München (DE)

(56) Entgegenhaltungen:
- EP-A- 0 987 135
- EP-A- 1 442 907
- DE-A1- 3 812 955
- DE-C- 344 606
- DE-C1- 19 703 818

## Beschreibung

Die Erfindung betrifft ein Fahrzeug-Schiebedach mit einem Schiebedachdeckel, der aus einer geschlossenen Stellung heraus in eine abgesenkte und in Fahrtrichtung betrachtet nach hinten verschobene Offen-Stellung und/oder in eine angehobene Lüfter-Stellung bewegbar ist, und mit einer am hinteren Rand des Schiebedachdeckels angeordneten bewegbaren Wasserrinne versehen ist, deren Bewegung von einer Wasserrinnenmechanik geführt ist.

Kraftfahrzeuge sind bekanntlich oftmals mit einem Fahrzeug-Schiebedach versehen, dessen Schiebedachdeckel in verschiedene Stellungen bewegt werden kann. Am Schiebedachdeckel ergeben sich konstruktionsbedingt zur umliegenden Karosserie selbst in der Geschlossen-Stellung gewisse Undichtigkeiten und auch bei Offen-Stellung und Lüfter-Stellung kann es zum Eintritt von Wasser kommen, welches bei bekannten Fahrzeug-Schiebedächern mit Hilfe einer Wasserrinne abgeführt wird, welche sich am hinteren Rand des Schiebedachdeckels befindet. Damit die Anforderungen bezüglich dem Wassermanagement am Fahrzeug-Schiebedach voll erfüllt werden können, sind derartige Wasserrinnen bewegbar gestaltet und werden mit Hilfe einer Wasserrinnenmechanik in ihrer Bewegung geführt. Die Bewegung der Wasserrinne wird dabei in der Regel bei der Verstellung des zugehörigen Schiebedachdeckels mit dem entsprechenden Antrieb mitgesteuert. Bei bekannten bewegbaren Wasserrinnen wird dabei eine in Fahrtrichtung gesehen vordere Kante der Wasserrinne in Lüfter-Stellung des Schiebedachdeckels angehoben und andererseits wird diese Vorderkante der Wasserrinne beim Absenken des Deckels in Richtung auf die Offen-Stellung nach unten geschwenkt.

Zur Realisierung dieser Funktion ist bei einer Ausführungsvariante gemäß dem Stand der Technik ein an der Fahrzeugkarosserie verschiebbarer Schlitten mit einem Schwenkgelenk vorgesehen, dessen Drehpunkt ca. 50 mm hinter der hinteren Kante der Wasserrinne angeordnet ist. Ein Fahrzeug-Schiebedach mit einer derart angelenkten Wasserrinne ist beispielsweise aus DE 37 40 129 A1 oder DE 3 812 955 bekannt.

Bei anderen Ausführungsvarianten gemäß dem Stand der Technik ist die Wasserrinne an einem mit dem Schiebedachdeckel beweglichen Abschnitt des Fahrzeug-Schiebedachs angelenkt und wird mit einem in einer Schiene an der Fahrzeugkarosserie geführten Gleitelement um diesen, sich vor der vorderen Kante der Wasserrinne befindenden Drehpunkt geschwenkt.

Bei den bekannten Kinematikaufbauten ergibt sich insbesondere im abgesenkten und in Fahrtrichtung betrachtet nach hinten verschobenen Zustand des Schiebedachdeckels ein vergleichsweise großer Maßaufbau der Gesamtkinematik nach hinten.

Der Erfindung liegt die Aufgabe zugrunde ein Fahrzeug-Schiebedach der eingangs genannten Art dahingehend zu verbessern, dass dafür insgesamt weniger Bauraum erforderlich ist.

Die Aufgabe ist gemäß der Erfindung mit einem gattungsgemäßen Fahrzeug-Schiebedach gelöst, bei dem die Wasserrinnenmechanik derart gestaltet ist, dass beim Absenken des Schiebedachdeckels und/oder beim Verschieben des Schiebedachdeckels nach hinten die Wasserrinne relativ zum Schiebedachdeckel in Fahrtrichtung nach vorne versetzt wird.

Durch den erfindungsgemäßen Versatz der Wasserrinne bei der Bewegung des zugehörigen Schiebedachdeckels in Richtung auf seine Offen-Stellung wird die in Fahrtrichtung betrachtete Gesamtlänge von Schiebedachdeckel und Wasserrinne verkürzt und derart "komprimiert" dass insgesamt vergleichsweise wenig Bauraum benötigt wird. Durch die derart verbesserte Öffnungsmöglichkeit des erfindungsgemäßen Fahrzeug-Schiebedachs kann dieses besonders vielfältig eingesetzt werden.

Der erfindungsgemäß erzielte Vorteil kommt besonders dann zum Tragen, wenn der Schiebedachdeckel als Glasdeckel gestaltet ist.

Das erfindungsgemäße Versetzen der Wasserrinne relativ zum Schiebedachdeckel in Fahrtrichtung nach vorne kann kinematisch besonders einfach realisiert werden, indem die Wasserrinnenmechanik zum Versetzen der Wasserrinne relativ zum Schiebedachdeckel in Fahrtrichtung nach vorne mit einer in Fahrtrichtung geneigt angeordneten Führung gestaltet ist, mit der die Wasserrinne beim Absenken des Schiebedachdeckels nach unten vorne bewegt wird.

Bei einer weiteren vorteilhaften Ausgestaltung des erfindungsgemäßen Fahrzeug-Schiebedachs ist vorgesehen, dass die Wasserrinne während des Absenkens des Schiebedachdeckels über einen großen Abschnitt ihres Weges parallel bewegt wird. Dies kann vorteilhaft erreicht werden, indem die Wasserrinnenmechanik zum Versetzen der Wasserrinne relativ zum Schiebedachdeckel in Fahrtrichtung nach vorne an mindestens einer der Seiten der Wasserrinne mit einer Parallelführung gestaltet ist. Die Wasserrinne kann mit einer solchen Parallelführung auch zugleich nach unten und nach vorne bewegt werden.

Die Lösung ist ferner gemäß der Erfindung mit einem gattungsgemäßen Fahrzeug-Schiebedach gelöst, bei dem die Wasserrinnenmechanik mit einem Schwenkgelenk für die Wasserrinne gestaltet ist, dessen Drehachse in Fahrtrichtung betrachtet zwischen der vorderen und hinteren Kante der Wasserrinne angeordnet ist. Mit anderen Worten ist die Wasserrinne derart ausgeführt, dass sie beim Schwenken eine Rotation um einen Punkt ausführt, der sich oberhalb oder unterhalb der eigentlichen wasserführenden Schale der Wasserrinne befindet. Auch eine Anordnung des Drehpunkts genau auf der Höhe der wasserführenden Schale ist sinnvoll. Besonders bevorzugt ist ein Drehpunkt, welcher sich geringfügig unterhalb der wasserführenden Schale und/oder im Abschnitt von deren hinterer Hälfte befindet.

Darüber hinaus ist die der Erfindung zugrunde liegende Aufgabe mit einem gattungsgemäßen Fahrzeug-Schiebedach gelöst, bei dem die Wasserrinnenmechanik mit einem ersten Schwenkgelenk für die Wasserrinne gestaltet ist, welches am zugehörigen Fahrzeugdach verschiebbar gelagert und beim Absenken des Schiebedachdeckels nach unten verschiebbar geführt ist.

Ein derartiges beim Absenken des Schiebedachdeckels nach unten verschiebbares Schwenkgelenk lässt es zu, dass die erfindungsgemäße Wasserrinne der Absenkbewegung des Schiebedachdeckels folgt, ohne dass bei dieser Absenkbewegung bereits zwingend die Wasserrinne geschwenkt wird. Ein Schwenken während des Absenkens ist mit einer derartigen Konstruktion trotzdem durchaus möglich. Es kann durch eine entsprechend gestaltete Wasserrinnenmechanik gezielt als eigenständige Bewegung gesteuert werden, während die Ausweichbewegung der Wasserrinne durch ein alleiniges Verschieben nach unten geschieht.

Im Hinblick auf das erwähnte gezielte Steuern einer Schwenkbewegung der Wasserrinne, ist die erfindungsgemäße Aufgabe schließlich auch mit einem gattungsgemäßen Fahrzeug-Schiebedach gelöst, bei dem die Wasserrinnenmechanik mit einem zweiten Schwenkgelenk für die Wasserrinne gestaltet ist, welches am Schiebedachdeckel verschiebbar gelagert und beim Bewegen des Schiebedachdeckels in Richtung auf dessen Offen-Stellung relativ zum Schiebedachdeckel nach vorne verschiebbar ist.

Ein derart verschiebbares zweites Schwenkgelenk für die Wasserrinne führt im Zusammenwirken mit einer entsprechend gestalteten weiteren Wasserrinnenmechanik dazu, dass die Wasserrinne beim Bewegen des Schiebedachdeckels in Richtung auf dessen Offen-Stellung in Fahrtrichtung betrachtet relativ zum Schiebedachdeckel versetzt und dadurch die oben bereits erwähnte Verkürzung der Gesamtbaueinheit aus Schiebedachdeckel und Wasserrinne erzielt wird. Zugleich dient das derart verschiebbar geführte zweite Schwenkgelenk zu einer präzisen Steuerung der Schwenkbewegung der erfindungsgemäßen Wasserrinne.

Das genannte erste Schwenkgelenk für die erfindungsgemäße Wasserrinne ist besonders vorteilhaft mit einem ersten an der Wasserrinne angeordneten Nocken gestaltet, der in einer zugehörigen ersten Kulisse der Wasserrinnenmechanik verschiebbar geführt ist. Auf diese Weise ist eine technisch einfach zu realisierende und dennoch über die gesamte Lebensdauer des erfindungsgemäßen Fahrzeug-Schiebedachs hinweg funktionstüchtige Lösung geschaffen.

Die erfindungsgemäße Wasserrinnenmechanik ist ferner vorteilhaft mit einem zweiten an der Wasserrinne angeordneten Nocken gestaltet, der in einer zugehörigen zweiten Kulisse der Wasserrinnenmechanik verschiebbar geführt ist und als eine Führung der Wasserrinne wirkt, wenn die Wasserrinne in der ersten Kulisse verschoben wird. Mit einer derartigen zweiten Kulisse kann auf kostengünstige Weise beispielsweise die oben bereits erwähnte Parallelverschiebung der erfindungsgemä-βen Wasserrinne beim Absenken des zugehörigen Schiebedachdeckels erreicht werden.

Die derartige zweite Kulisse ist darüber hinaus vorteilhaft nach oben offen gestaltet. Es wird dadurch erreicht, dass der zweite Nocken aus der zweiten Kulisse austreten kann, während die Wasserrinne um den als erstes Schwenkgelenk wirkenden ersten Nocken geschwenkt wird. Die Wasserrinne ist dadurch bei der Schwenkbewegung aus der zweiten Kulisse freigegeben und wird nur in jenen Betriebszuständen der Wasserrinnenmechanik durch die zweite Kulisse geführt, bei denen die Wasserrinne auch in der ersten Kulisse verschoben wird.

Damit die Bewegung der erfindungsgemäßen Wasserrinne präzise geführt und zugleich besonders gut an die oft stark unterschiedlichen Randbedingungen bei verschiedenen Fahrzeugtypen angepasst werden kann, ist die erfindungsgemäße Wasserrinnenmechanik ferner vorteilhaft mit einem, insbesondere dritten an der Wasserrinne angeordneten Nocken gestaltet, der in einer, insbesondere dritten Kulisse der Wasserrinnenmechanik verschiebbar geführt ist und ferner bei bestimmten Betriebszuständen der Wasserrinnenmechanik als ein zweites bzw. das oben genannte Schwenkgelenk für die Wasserrinne wirkt. Die derartige dritte Kulisse übernimmt, wie oben bereits erwähnt, die Führung der Schwenkbewegung der erfindungsgemä-βen Wasserrinne, während mit der ersten und zweiten Kulisse ein beispielsweise im Wesentlichen paralleles Absenken der Wasserrinne nach unten und vorne während der Absenkbewegung des zugehörigen Schiebedachdeckels erzielt wird. Die genannten Schwenk- und Absenkbewegungen der erfindungsgemäßen Wasserrinne erfolgen dabei in sämtlichen Fällen besonders vorteilhaft stets derart, dass im abgesenkten und eingeschwenkten Zustand der Wasserrinne sich deren obere, hintere Kante über dem Niveau der Oberseite des zugehörigen Schiebedachdeckels befindet.

Damit bei dem erfindungsgemäßen Fahrzeug-Schiebedach während des Betriebs des zugehörigen Fahrzeugs keine unerwünschten Rattergeräusche auftreten, und/oder die Wasserrinne durch ein Bewegen des zugehörigen Schiebedachdeckels in den gewünschten Stellungen gehalten bzw. in diese gedrängt werden kann, ist es schließlich vorteilhaft, wenn ein Kulissenhebel vorgesehen ist, mit dem die Bewegung der Wasserrinne angetrieben oder geleitet wird, und ein Federelement vorgesehen ist, mit dem bei einem Bewegen der Wasserrinne diese relativ zum Kulissenhebel federnd vorgespannt ist. Mit einem derartigen Kulissenhebel ist vorteilhaft der oben genannte dritte Nocken an die erfindungsgemäße Wasserrinne gekoppelt und die Wasserrinne damit derart nach oben gedrängt, dass der als erstes Schwenkgelenk wirkende erste Nocken bei bestimmten Betriebszuständen der Wasserrinnenmechanik in der ersten Kulisse an einen oberen Anschlag gedrängt und dort gehalten wird. In dieser Lage des ersten Nockens kann die Wasserrinne dann um das erste Schwenkgelenk geschwenkt werden. Zum Absenken und parallelen Verschieben der Wasserrinne nach unten in der oben genannten ersten und zweiten Kulisse ist das Federelement des Kulissenhebels vorteilhaft derart ausgelegt, dass das Federelement das Gewicht der Wasserrinne im Wesentlichen trägt. Die Wasserrinne kann dann mit ihrem ersten und zweiten Nocken in der ersten und zweiten Kulisse verschoben werden, wobei diese Kulisse wie erläutert als Parallelführung wirken. Sowohl das Schenken als auch das Parallelverschieben der Wasserrinne wird dabei durch die Bewegung des dritten Nockens und des zugehörigen Kulissenhebels gesteuert. Der dritte Nocken gleitet während der Bewegung entlang der dritten Kulisse, die vorteilhaft am Schiebedachdeckel angeordnet und/oder von diesem bewegt wird. Durch entsprechende Gestaltung der Kulissen ist die Variabilität der gesamten Wasserrinnenmechanik für deren Anpassung an verschiedene Fahrzeugtypen sehr hoch.

Nachfolgend wird ein Ausführungsbeispiel eines erfindungsgemäßen Fahrzeug-Schiebedachs anhand der beigefügten schematischen Zeichnungen näher erläutert.

Es zeigen
- Fig. 1: eine teilweise perspektivische Ansicht von schräg oben auf ein Ausführungsbeispiel eines erfindungsgemäßen Fahrzeug-Schiebedachs in der Geschlossen-Stellung des zugehörigen Schiebedachdeckels;
- Fig. 2: die Draufsicht auf das Fahrzeug-Schiebedach gemäß Fig. 1;
- Fig. 3: das Detail III gemäß Fig. 2;
- Fig. 4: den Schnitt IV-IV gemäß Fig. 3;
- Fig. 5: den Schnitt V-V gemäß Fig. 2;
- Fig. 6: den Schnitt VI-VI gemäß Fig. 5;
- Fig. 7: den Schnitt VII-VII gemäß Fig. 5;
- Fig. 8: den Schnitt VIII-VIII gemäß Fig. 2;
- Fig. 9: den Schnitt VIIII-VIIIII gemäß Fig. 2;
- Fig. 10: den Schnitt X-X gemäß Fig. 2;
- Fig. 11: den Schnitt XI-XI gemäß Fig. 9;
- Fig. 12: die Darstellung gemäß Fig. 1 in der Lüfter-Stellung des zugehörigen Schiebedachdeckels;
- Fig. 13: die Draufsicht auf ein Fahrzeug-Schiebedach gemäß Fig. 12;
- Fig. 14: den Schnitt XIIII-XIIII gemäß Fig. 13;
- Fig. 15: den Schnitt XV gemäß Fig. 13;
- Fig. 16: den Schnitt XVI-XVI gemäß Fig. 15;
- Fig. 17: die Darstellung gemäß Fig. 1 in der abgesenkten Stellung des zugehörigen Schiebedachdeckels;
- Fig. 18: die Draufsicht auf ein Fahrzeug-Schiebedach gemäß Fig. 17;
- Fig. 19: den Schnitt XVIIII-XVIIIII gemäß Fig. 18;
- Fig. 20: den Schnitt XX-XX gemäß Fig. 18; und
- Fig. 21: den Schnitt XXI-XXI gemäß Fig. 20.

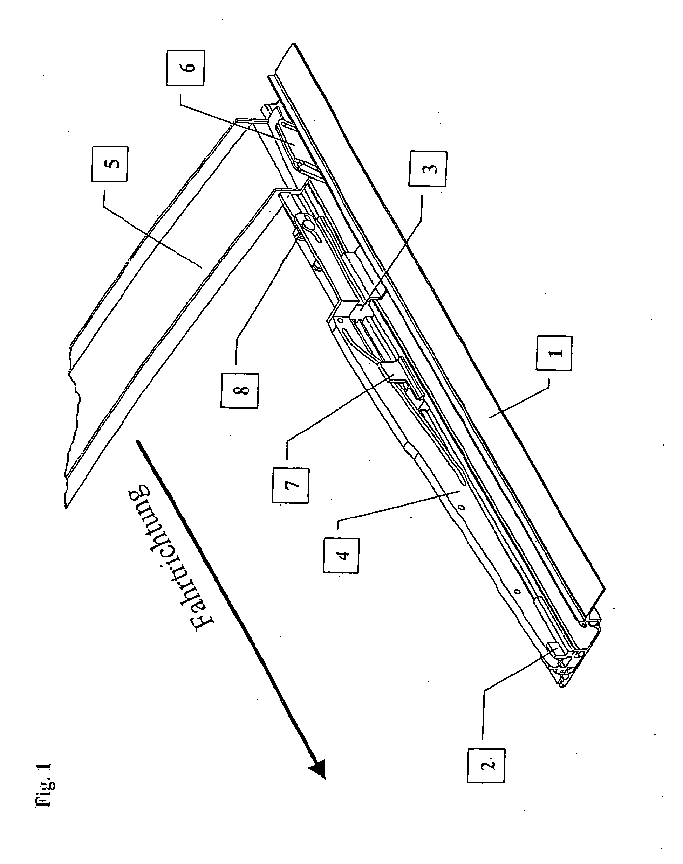

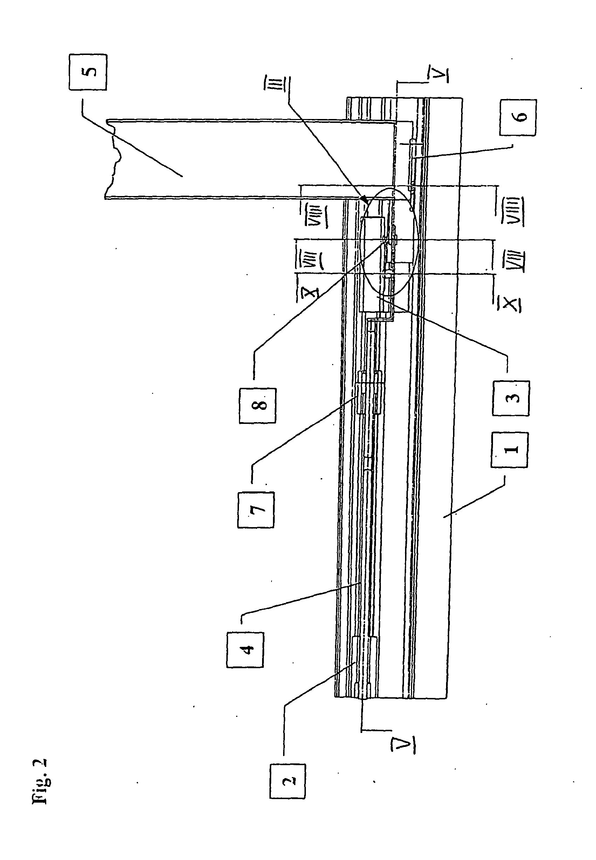

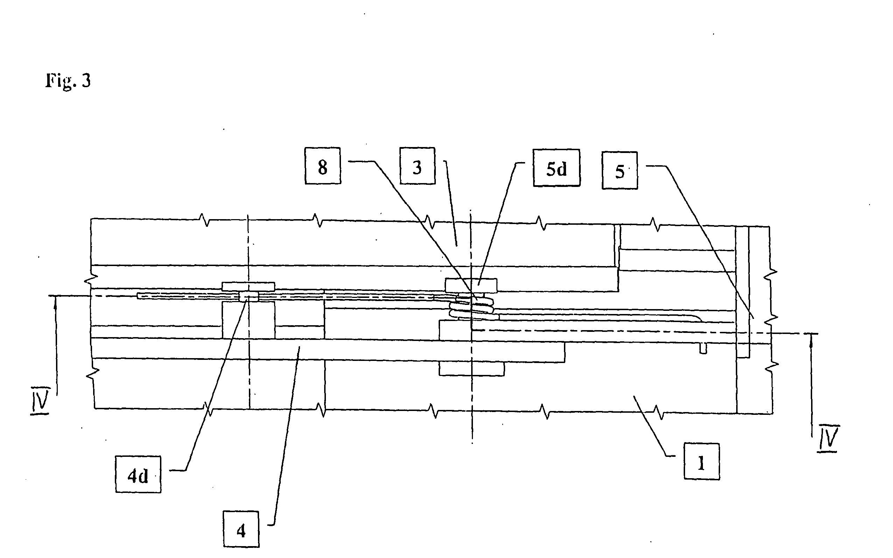

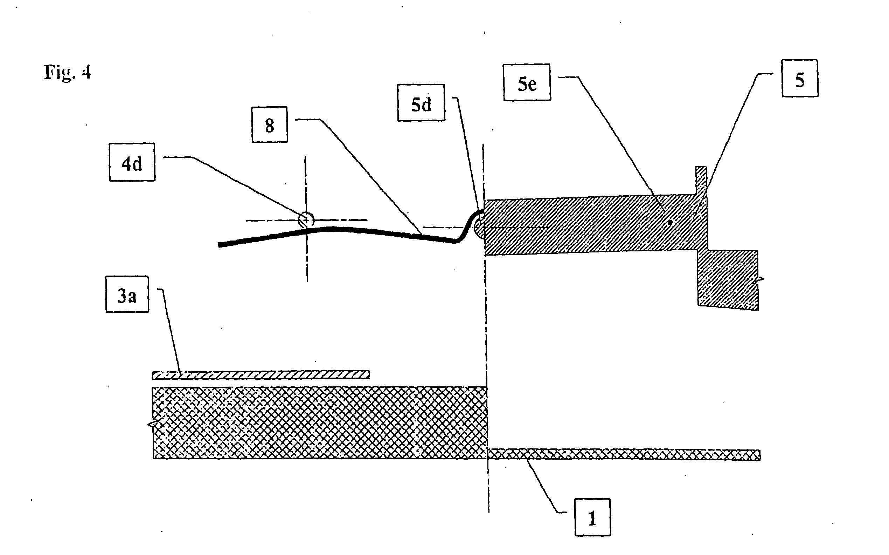

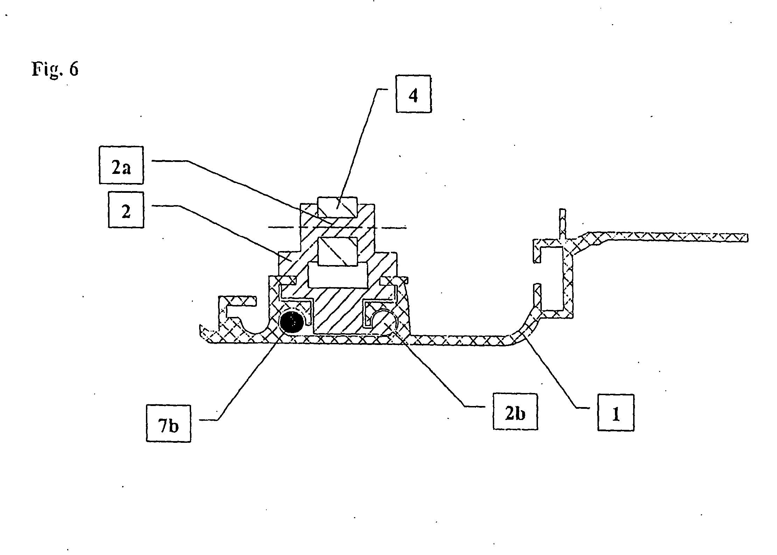

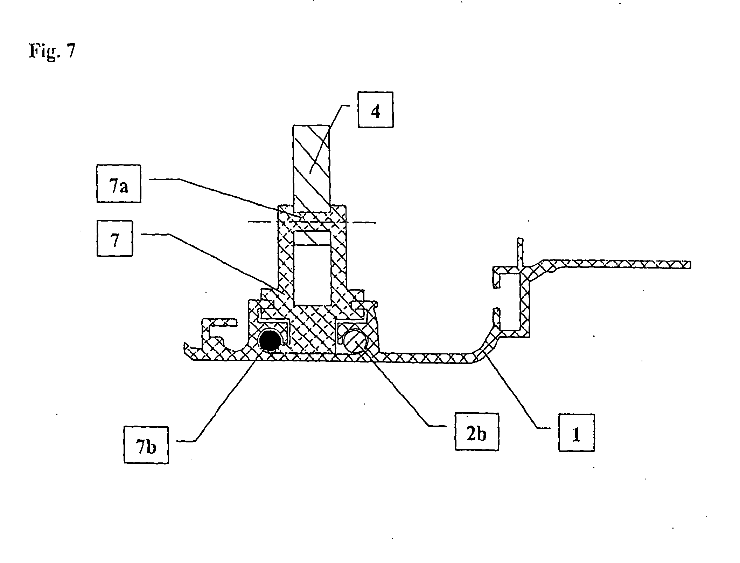

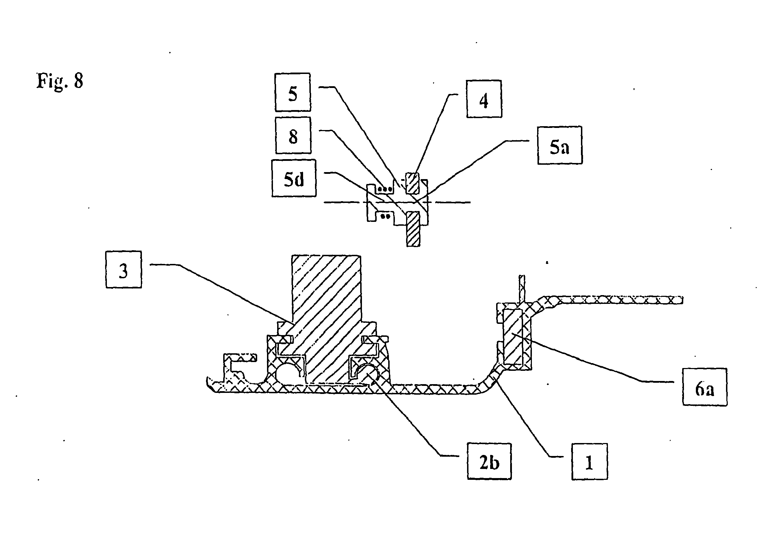

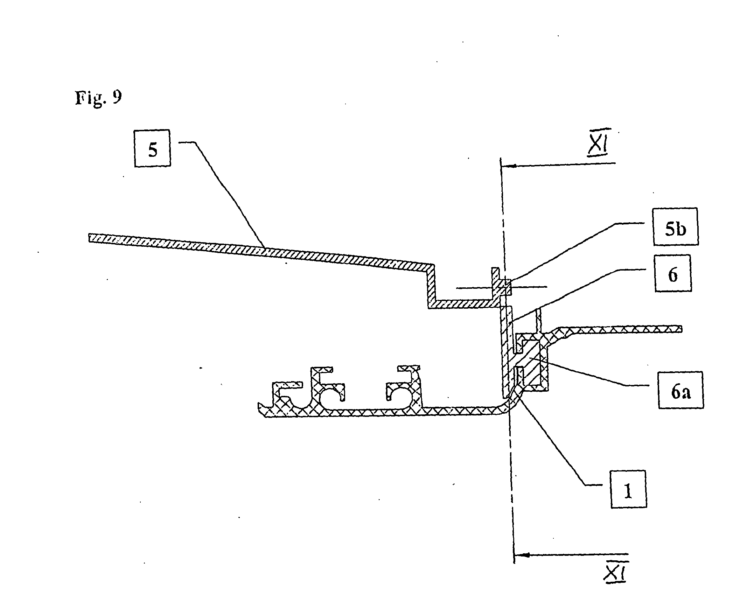

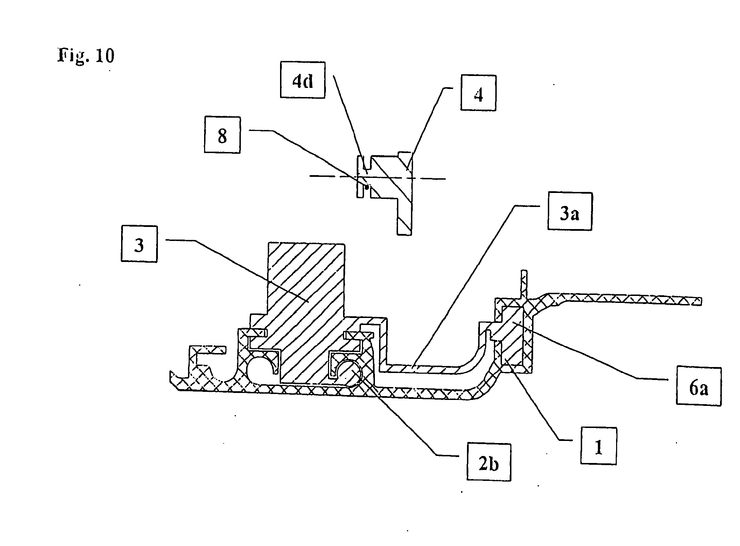

In den Figuren 1 bis 11 ist ein erfindungsgemäßes Fahrzeug-Schiebedach in der sogenannten Geschlossen-Stellung dargestellt. Das Fahrzeug-Schiebedach ist mit einer Führungsschiene 1 gestaltet, welche sich im Wesentlichen in Fahrtrichtung eines weiter nicht dargestellten Fahrzeugs erstreckt. Die Führungsschiene 1 ist profiliert mit mehreren Nuten und Stiegen gestaltet, an denen an einem in Fahrtrichtung vorderen Abschnitt ein vorderer Gleiter 2 und in einem mittleren Abschnitt der Führungsschiene 1 ein hinterer Gleiter 3 verschiebbar geführt sind.

An dem vorderen Gleiter 2 ist ein sich im Wesentlichen in Richtung der Führungsschiene 1 erstreckender Kulissenhebel 4 angelenkt, welcher zum Steuern einer an einem hinteren Abschnitt der Führungsschiene 1 angeordneten, sich im Wesentlichen quer zur Fahrtrichtung erstreckenden Wasserrinne 5 dient. Die Wasserrinne 5 ist dazu an einem Wasserrinnenträger 6 abgestützt und der Kulissenhebel 4 kann mit Hilfe eines Antriebsschlittens 7 in Bezug auf die Führungsschiene 1 hoch- und niedergeschwenkt werden.

Bei der derartigen Bewegung des Kulissenhebels 4 kommt unter anderem ferner eine Feder 8 zur Wirkung, welche zum Abstützen der Wasserrinne 5 an dem Kulissenhebel 4 dient.

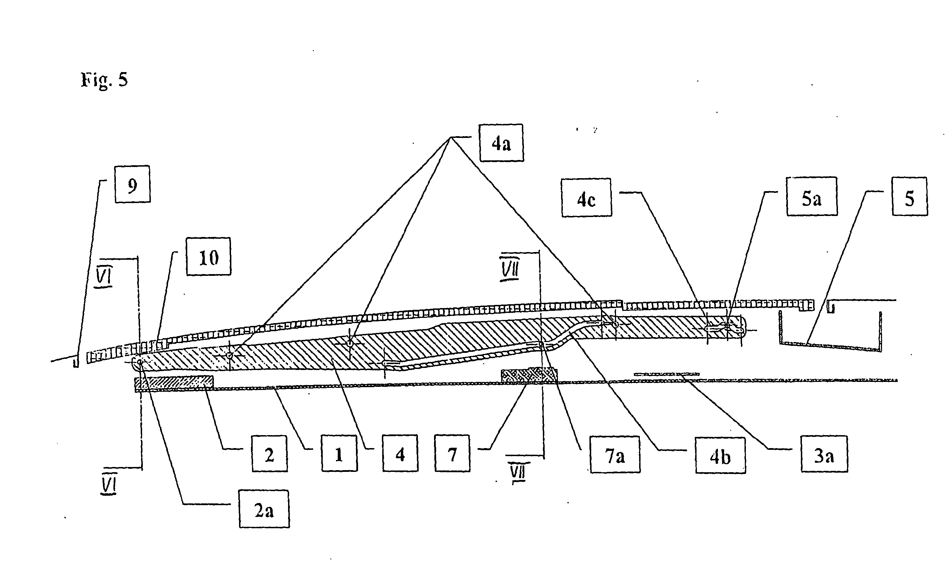

Die gesamte Anordnung und insbesondere die Führungsschiene 1 ist an einer nur abschnittsweise dargestellten Fahrzeugkarosserie 9 (siehe Fig. 5) abgestützt und dient zum Bewegen eines Schiebedachdeckels 10 in Form eines Glasdeckels.

Wie oben bereits angedeutet dient die dargestellte Mechanik des Fahrzeug-Schiebedachs jedoch nicht allein zum Bewegen des Schiebedachdeckels 10 sondern auch zum Bewegen der Wasserrinne 5, damit diese je nach Stellung des Schiebedachdeckels 10 in Positionen bewegt wird, welche eine optimale Abführung von Wasser an dem Fahrzeug-Schiebedach gewährleisten und zugleich zu einer insgesamt besonders raumsparenden Gesamtanordnung führen.

Die Wasserrinne 5 ist dazu mit einer Wasserrinnenmechanik bewegbar, von der einige Elemente oben bereits erwähnt wurden. Nachfolgend wird die Wasserrinnenmechanik im Detail erläutert.

An dem vorderen Gleiter 2 ist ein sich im Wesentlichen quer zur Fahrtrichtung erstreckender Kulissenlagerbolzen 2a angeordnet, an dem der Kulissenhebel 4 schwenkbar angebracht ist. Der vordere Gleiter 2 ist ferner über eine Verbindungsstange 2b mit dem hinteren Gleiter 3 fest verbunden. Der hintere Gleiter 3 besitzt seinerseits über ein Verbindungsstück 3a eine feste Verbindung hin zum Wasserrinnenträger 6.

An dem Kulissenhebel 4 sind insgesamt drei Befestigungsbolzen 4a vorgesehen, mittels denen der Schiebedachdeckel 10 am Kulissenhebel 4 derart befestigt ist, dass er über diesem die Gesamtanordnung größtenteils abdeckt. In dem Kulissenhebel 4 ist eine sich im Wesentlichen in Fahrtrichtung erstreckende, über die Länge des Kulissenhebels 4 jedoch nach hinten ansteigende Deckelkulisse 4b ausgebildet. Ferner ist in dem Kulissenhebel 4 an dessen hinteren Endabschnitt eine Wasserrinnenkulisse 4c vorgesehen. An dem Kulissenhebel 4 ist schließlich noch ein Kulissendruckbolzen 4d angeordnet, welcher quer zur Fahrtrichtung zwischen dem hinteren Ende der Deckelkulisse 4b und dem vorderen Ende der Wasserrinnenkulisse 4c von dem Kulissenhebel 4 absteht.

In der Wasserrinnenkulisse 4c ist ein Wasserrinnengleitbolzen 5a geführt, welcher in der Wasserrinnenkulisse 4c während des Schwenkens des Kulissenhebels 4 verschiebbar ist. Der Wasserrinnengleitbolzen 5a geht dabei unmittelbar in einen Wasserrinnenfederbolzen 5d über, an dem die Feder 8 mit einer im Wesentlichen zylindrisch gewickelten Federwendel aufgeschoben ist.

Von der derart gewickelten Federwendel stehen die Endabschnitte der Felder 8 im Wesentlichen in Fahrtrichtung und entgegen der Fahrtrichtung ab und sind einerseits an einem Federfixierpunkt 5e an der Wasserrinne 5 und andererseits über den Kulissendruckbolzen 4d an dem Kulissenhebel 4 abgestützt.

Die Wasserrinne 5 ist ferner mit Hilfe von zwei von deren Stirnseite im Wesentlichen quer zur Fahrtrichtung abstehenden Wasserrinnengleitbolzen bzw. Wasserrinnennocken 5b und 5c geführt, welche in Wasserrinnenträgerkulissen 6b und 6c geführt sind. Diese Wasserrinnenträgerkulissen 6b und 6c sind zur Fahrtrichtung betrachtet geneigt gestaltet, derart dass die Wasserrinnengleitbolzen 5b und 5c bei einem Gleiten entlang der Wasserrinnenträgerkulissen 6b und 6c in Fahrtrichtung jeweils nach unten und vorne bewegt werden. Der die Wasserrinnenträgerkulissen 6b und 6c aufnehmende Wasserrinnenträger 6 ist seinerseits an einer Wasserrinnenträgerführung 6a verschiebbar an der Führungsschiene 1 geführt und, wie bereits oben erwähnt, mit dem Verbindungsstück 3a verbunden.

Zum Bewegen des Kulissenhebels 4 ist schließlich an dem Antriebsschlitten 7 ein Kulissengleitbolzen 7a quer zur Fahrtrichtung angeordnet, der in die Deckelkulisse 4b hineinragt. Verschiebbar ist der Antriebsschlitten 7 und damit der Kulissengleitbolzen 7a mit Hilfe eines Bürstenkabels 7b.

In der in den Figuren 1 bis 11 dargestellten Geschlossen-Stellung des Schiebedachdeckels 10 (und auch in der nachfolgend noch genannten Lüfter-Stellung und abgesenkten Stellung) ist der hintere Gleiter 3 mit der Führungsschiene 1 fest verrastet. Über das Bürstenkabel 7b wird der Antriebsschlitten dann beispielsweise derart bewegt, dass er in Fahrtrichtung entlang der Führungsschiene 1 nach vorne gezogen wird. Dabei gleitet der Kulissengleitbolzen 7a in der Deckelkulisse 4b des Kulissenhebels 4 entlang und schwenkt damit den Kulissenhebel 4 nach oben.

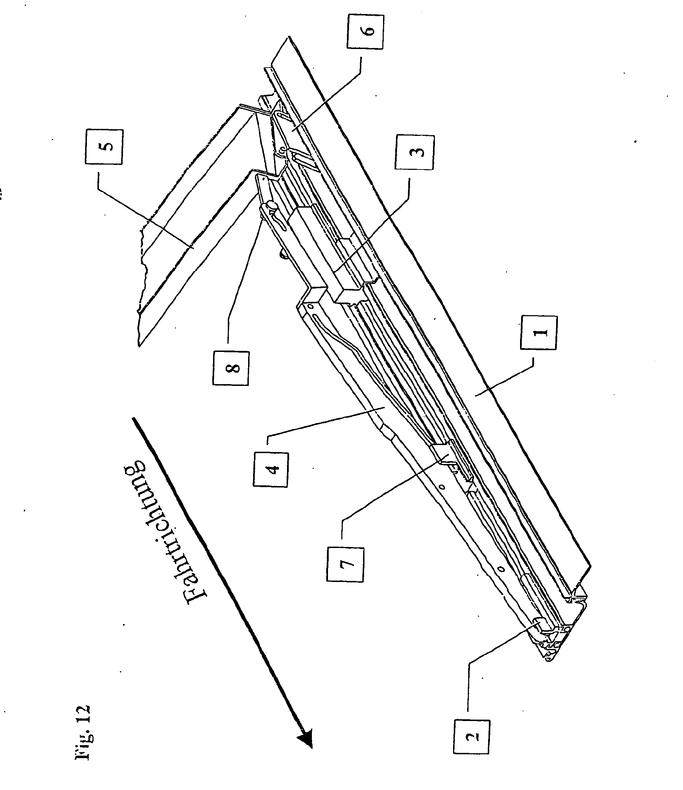

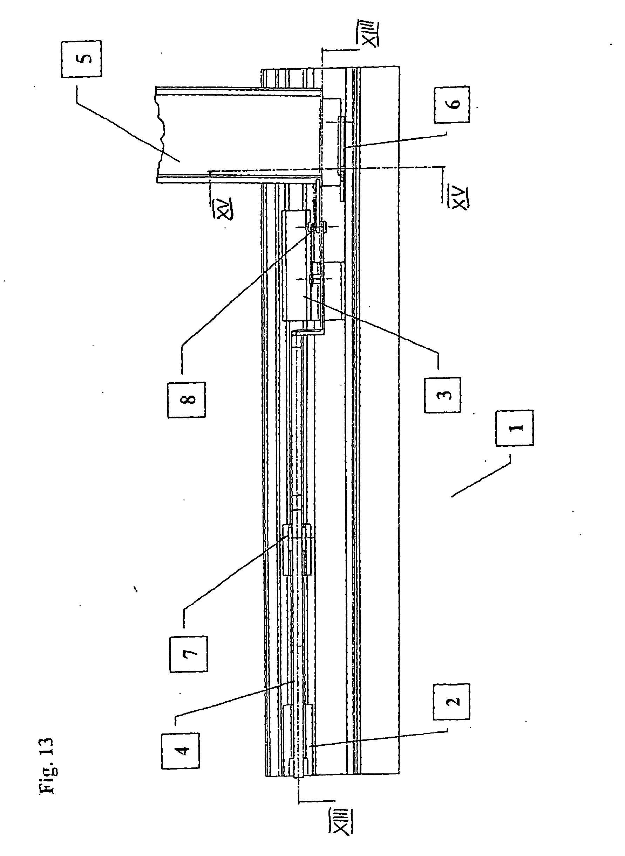

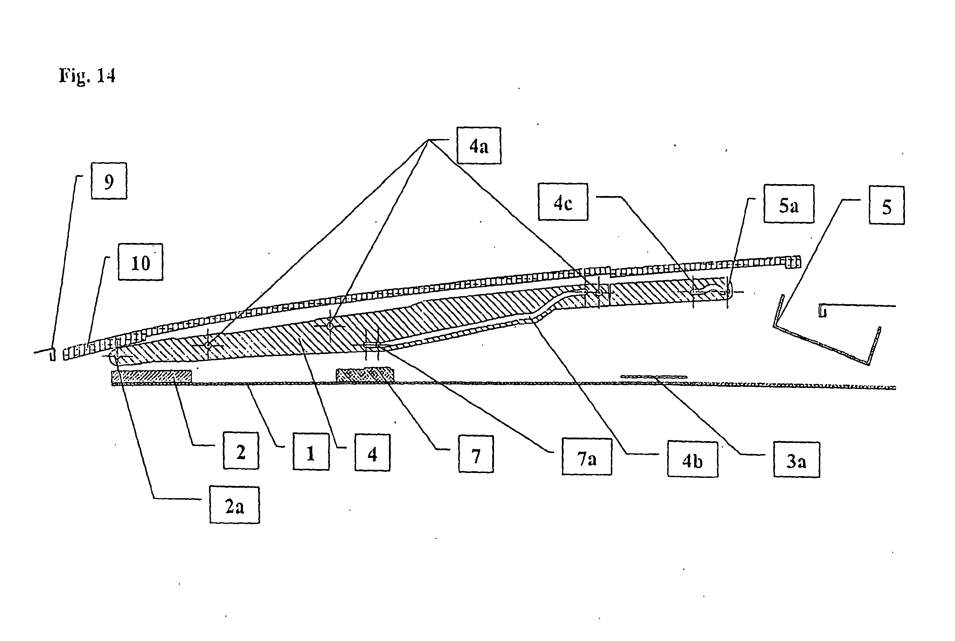

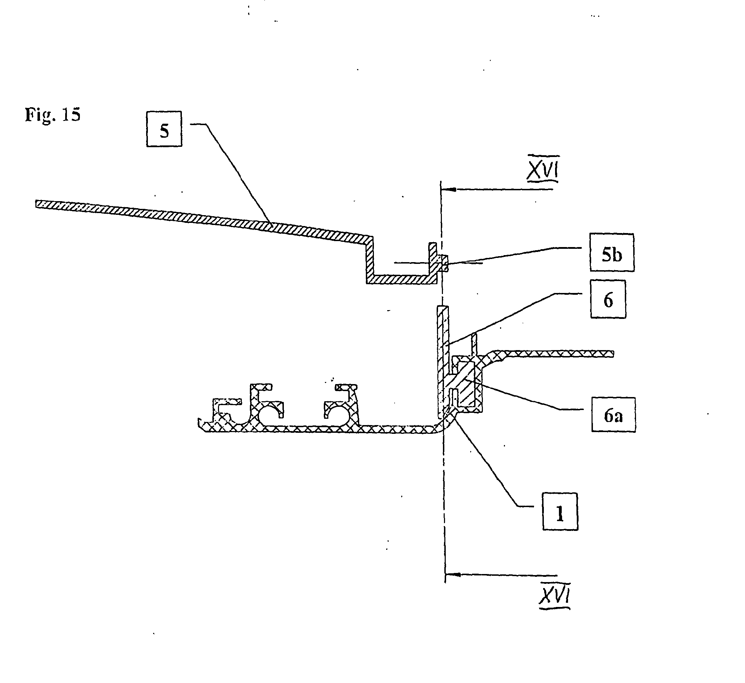

Auf diese Weise wird der Kulissenhebel 4 und damit der darauf befestigte Schiebedachdeckel 10 in die in den Figuren 12 bis 16 gezeigte Lüfter-Stellung bewegt. Mit dem Schwenken des Kulissenhebels 4 wird auch die darin angeordnete Wasserrinnenkulisse 4c insgesamt angehoben. Weil andererseits aber die Wasserrinne 5 mit den Wasserrinnengleitbolzen 5c und 5d in den Wasserrinnenträgerkulissen 6b und 6c des Wasserrinnenträgers 6 geführt ist, ist deren Bewegung beim Anheben des Kulissenhebels 4 derart begrenzt, dass es zu einem Verschieben des Wasserrinnengleitbolzens 5a in der Wasserrinnenkulisse 4c bezogen auf die Fahrtrichtung nach hinten kommt.

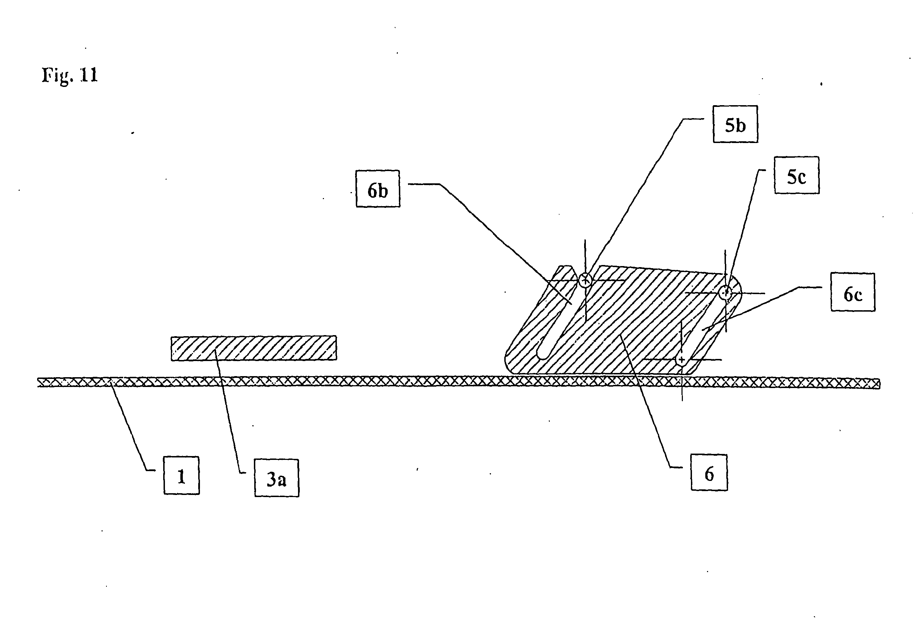

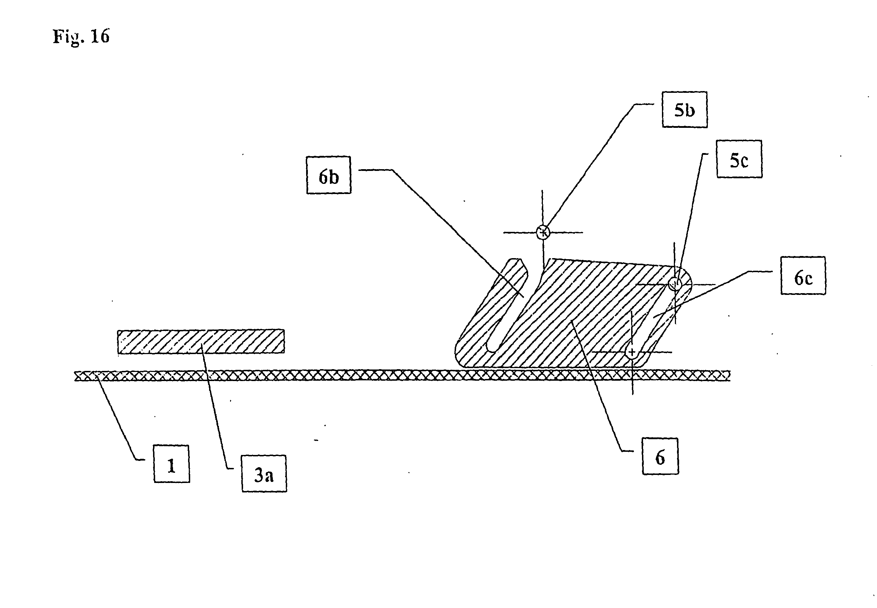

Aufgrund der Federspannung der Feder 8, mit deren Hilfe das Gewicht der Wasserrinne 5 am Kulissendruckbolzen 4d des Kulissenhebels 4 federnd abgestützt ist, ist die Wasserrinne 5 mit ihrem Wasserrinnengleitbolzen 5c gegen einen Anschlag am oberen und hinteren Ende der Wasserrinnenträgerkulisse 6c gedrängt. Die vordere Wasserrinnenträgerkulisse 6b, welche sich im Wesentlichen parallel zur hinteren Wasserrinnenträgerkulisse 6c erstreckt, weist hingegen keinen solchen oberen Anschlag auf. Sie ist vielmehr an ihrem oberen Endbereich derart offen gestaltet, dass der Wasserrinnengleitbolzen 5b beim Anheben der Wasserrinne 5 dort austreten und bei einem Absenken der Wasserrinne 5 dort auch wieder in die Wasserrinnenträgerkulisse 6b eintreten kann (siehe Figuren 11 und 16). Beim Anheben des Kulissenhebels 4 in Lüfter-Stellung wird daher die Wasserrinne 5 um den hinteren Wasserrinnengleitbolzen 5c geschwenkt, während der Wasserrinnengleitbolzen 5a in der Wasserrinnenkulisse 4c entlang gleitet.

Beim Absenken des Schiebedachdeckels 10 wird diese Bewegung umgekehrt ausgeführt und der vordere Wasserrinnengleitbolzen 5b läuft in die vordere Wasserrinnenträgerkulisse 6b ein. Die Wasserrinne 5 ist dann durch die mit den Wasserrinnenträgerkulissen 6b und 6c geschaffene Parallelführung eindeutig in ihrer Lage bestimmt, während die Feder 8 derart zur Wirkung kommt, dass ein Klappern der gesamten Mechanik verhindert ist.

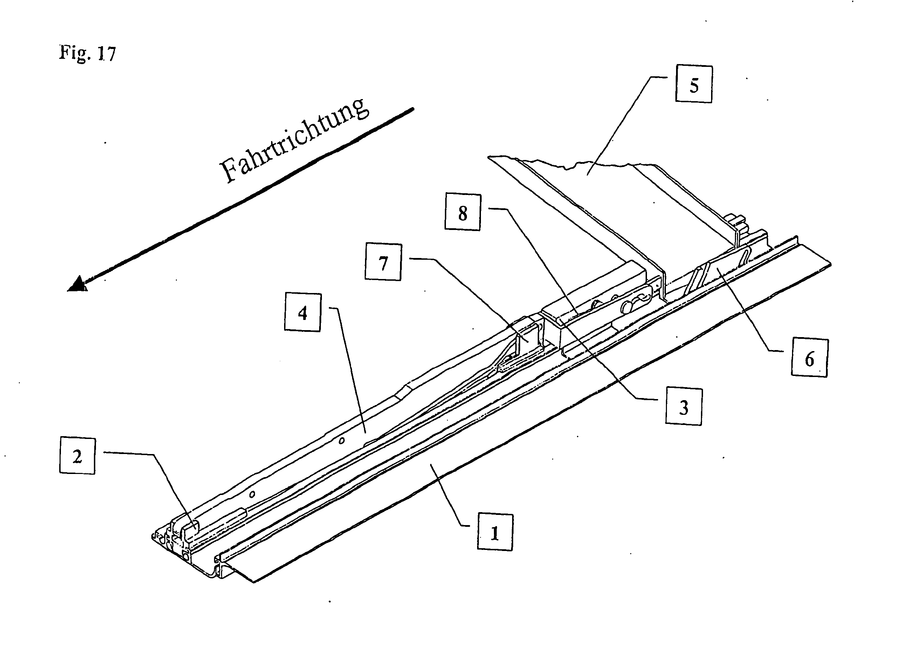

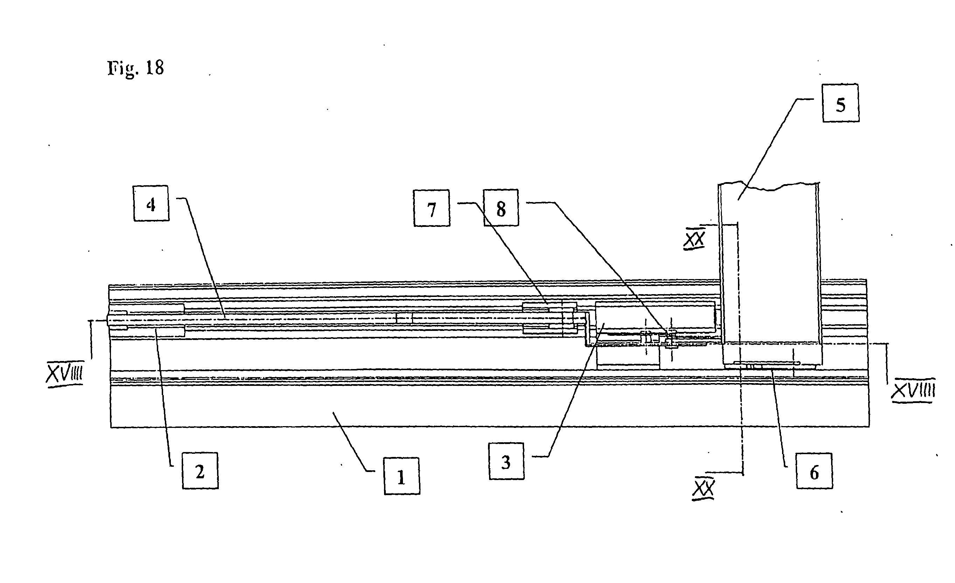

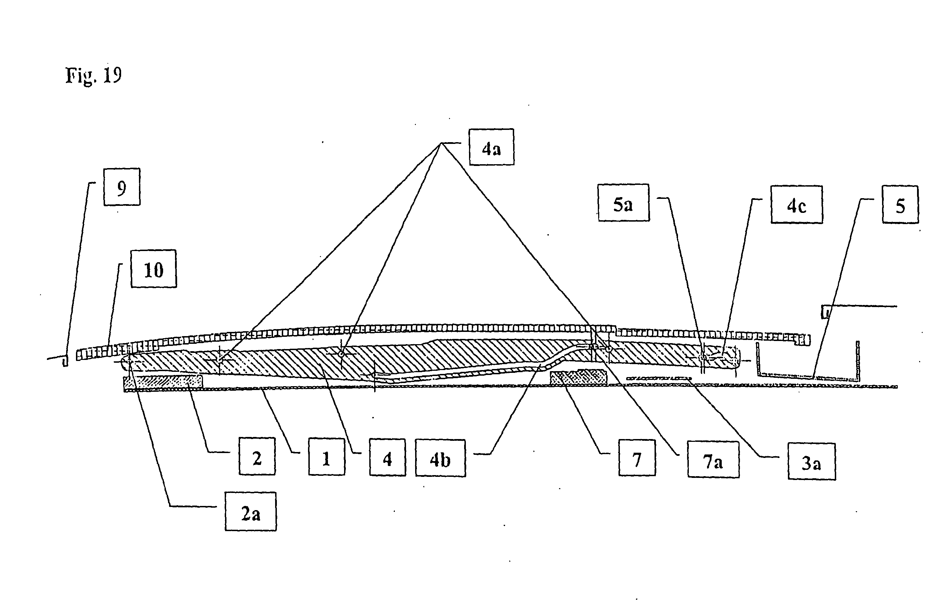

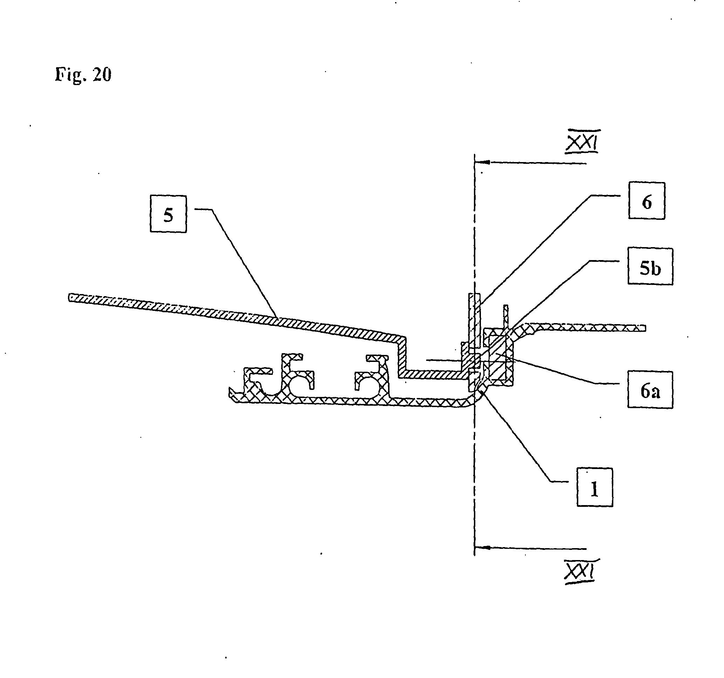

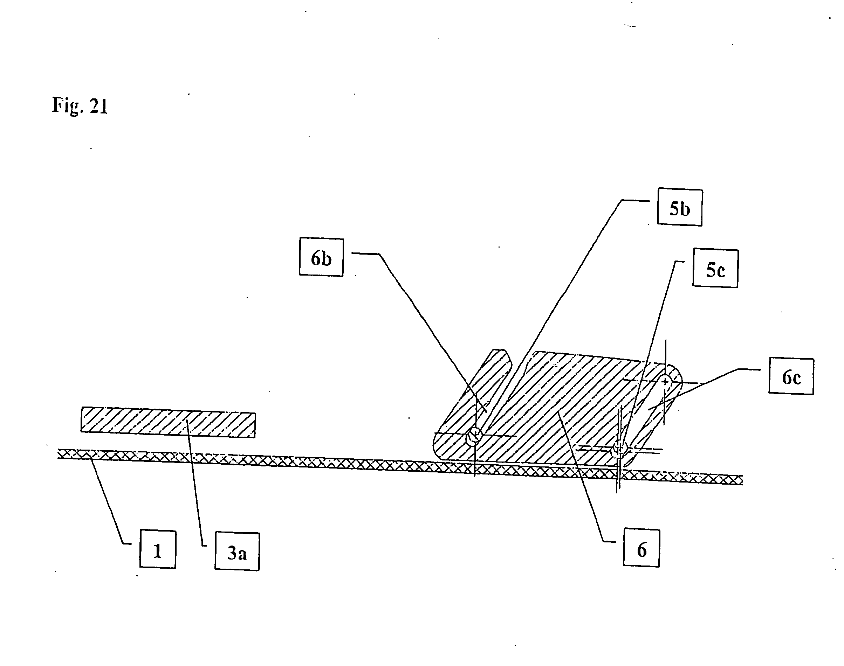

Während des weiteren Absenkens des Schiebedachdeckels 10 in die in den Figuren 17 bis 21 dargestellte abgesenkte Stellung, wird die Wasserrinne 5 aufgrund der Gestalt der Wasserrinnenträgerkulissen 6b und 6c mit sich nach unten bewegendem Kulissenhebel 4 ebenfalls nach unten und zugleich nach vorne zum Schiebedachdeckel 10 herangezogen. Durch eine entsprechende Ausformung der Wasserrinnenkulisse 4c ist dabei eine exakte Steuerbewegung möglich.

Nach der Absenkbewegung wird schließlich der hintere Gleiter 3 von der Führungsschiene 1 entkoppelt und mit dem vorderen Gleiter 2 derart verbunden, dass im Wesentlichen die gesamte Mechanik mit der an den Schiebedachdeckel 10 herangezogenen Wasserrinne 5 zum Öffnen des Schiebedachdeckels 10 nach hinten verschoben wird.

Um zu vermeiden, dass beim Beschleunigen des zugehörigen Fahrzeugs Wasser, welches auf dem abgesenkten bzw. teilabgesenkten Schiebedachdeckel 10 verblieben ist, über die Hinterkante der Wasserrinne 5 gelangen kann, ist bei einem besonders bevorzugten Ausführungsbeispiel die Wasserrinne 5 an der Hinterkante entsprechend hoch gestaltet, insbesondere in Richtung der Fahrzeughochachse höher als die Hinterkante des Schiebedachdeckels 10. Über derartige Ausformungen der Wasserrinne 5 kann gegebenenfalls eine Wasserfangfunktion realisiert werden. Alternativ können Zusatzelemente, wie beispielsweise eine elastische Dichtung verwendet werden.

### Bezugszeichenliste

- 1: Führungsschiene
- 2: vorderer Gleiter
- 2a: Kulissenlagerbolzen
- 2b: Verbindungsstange
- 3: hinterer Gleiter
- 3a: Verbindungsstück
- 4: Kulissenhebel
- 4a: Befestigungsbolzen
- 4b: Deckelkulisse
- 4c: Wasserrinnenkulisse
- 4d: Kulissendruckbolzen
- 5: Wasserrinne
- 5a: Wasserrinnengleitbolzen
- 5b: Wasserrinnengleitbolzen
- 5c: Wasserrinnengleitbolzen
- 5d: Wasserrinnenfederbolzen
- 5e: Federfixierpunkt
- 6: Wasserrinnenträger
- 6a: Wasserrinnenträgerführung
- 6b: Wasserrinnenträgerkulisse
- 6c: Wasserrinnenträgerkulisse
- 7: Antriebsschlitten
- 7a: Kulissengleitbolzen
- 7b: Bürstenkabel
- 8: Feder
- 9: Fahrzeugkarosserie
- 10: Schiebedachdeckel

## Patentansprüche

1. Fahrzeug-Schiebedach mit einem Schiebedachdeckel (10) der aus einer Geschlossen-Stellung heraus in eine abgesenkte und in Fahrtrichtung betrachtet nach hinten verschobene Offen-Stellung bewegbar ist, und mit einer am hinteren Rand des Schiebdachdeckels (10) angeordneten, bewegbaren Wasserrinne (5), deren Bewegung von einer Wasserrinnenmechanik geführt ist, **dadurch gekennzeichnet, dass** die Wasserrinnenmechanik derart gestaltet ist (4c, 5a, 5b, 5c, 6b, 6c), dass beim Absenken des Schiebedachdeckels (10) die Wasserrinne (5) relativ zum Schiebedachdeckel (10) in Fahrtrichtung nach vorne versetzt wird, und dass die Wasserrinnenmechanik (4c, 5a, 5b, 5c, 6b, 6c) zum Versetzen der Wasserrinne (5) relativ zum Schiebedachdeckel (10) in Fahrtrichtung nach vorne mit einer in Fahrtrichtung geneigt angeordneten Führung (6b, 6c) gestaltet ist, mit der die Wasserrinne (5) beim Absenken des Schiebedachdeckels (10) nach unten und vorne bewegt wird.

2. Fahrzeug-Schiebedach nach Anspruch 1, **dadurch gekennzeichnet, dass** die Wasserrinnenmechanik (4c, 5a, 5b, 5c, 6b, 6c) zum Versetzen der Wasserrinne (5) relativ zum Schiebedachdeckel (10) in Fahrtrichtung nach vorne an mindestens einer der Seiten der Wasserrinne (5) mit einer Parallelführung (5b, 5c, 6b, 6c) gestaltet ist, mit der die Wasserrinne (5) beim Absenken des Schiebedachdeckels (10) im Wesentlichen parallel nach unten und zugleich nach vorne bewegt werden kann.

3. Fahrzeug-Schiebedach nach Anspruch 1 oder 2, mit einem Schiebedachdeckel (10) der aus einer Geschlossen-Stellung heraus in eine abgesenkte und in Fahrtrichtung betrachtet nach hinten verschobene Offen-Stellung oder zusätzlich in eine angehobene Lüfter-Stellung bewegbar ist, und mit einer am hinteren Rand des Schiebdachdeckels (10) angeordneten, bewegbaren Wasserrinne (5), deren Bewegung von einer Wasserrinnenmechanik geführt ist, **dadurch gekennzeichnet, dass** die Wasserrinnenmechanik (4c, 5a, 5b, 5c, 6b, 6c) mit einem Schwenkgelenk (5c) für die Wasserrinne (5) gestaltet ist, dessen Drehachse in Fahrtrichtung betrachtet zwischen der vorderen und hinteren Kante der Wasserrinne (5) angeordnet ist.

4. Fahrzeug-Schiebedach nach einem der Ansprüche 1 bis 3, mit einer am hinteren Rand des Schiebedachdeckels (10) angeordneten, bewegbaren Wasserrinne (5), deren Bewegung von einer Wasserrinnenmechanik geführt ist, **dadurch gekennzeichnet, dass** die Wasserrinnenmechanik (4c, 5a, 5b, 5c, 6b, 6c) mit einem ersten Schwenkgelenk (5c) für die Wasserrinne (5) gestaltet ist, welches am zugehörigen Fahrzeugdach verschiebbar gelagert (6c) und beim Absenken des Schiebedachdeckels (10) nach unten verschiebbar ist.

5. Fahrzeug-Schiebedach nach einem der Ansprüche 1 bis 4, mit einer am hinteren Rand des Schiebedachdeckels (10) angeordneten, bewegbaren Wasserrinne (5), deren Bewegung von einer Wasserrinnenmechanik geführt ist, **dadurch gekennzeichnet, dass** die Wasserrinnenmechanik (4c, 5a, 5b, 5c, 6b, 6c) mit einem zweiten Schwenkgelenk (5a) für die Wasserrinne (5) gestaltet ist, welches am Schiebedachdeckel (10) verschiebbar gelagert (4c) und beim Bewegen des Schiebedachdeckels (10) in Richtung auf seine Offen-Stellung relativ zum Schiebedachdeckel (10) nach vorne verschiebbar ist.

6. Fahrzeug-Schiebedach nach einem der Ansprüche 1 bis 5, **dadurch gekennzeichnet, dass** die Wasserrinnenmechanik (4c, 5a, 5b, 5c, 6b, 6c) mit einem ersten an der Wasserrinne (5) angeordneten Nocken (5c) gestaltet ist, der in einer zugehörigen ersten Kulisse (6c) der Wasserrinnenmechanik (4c, 5a, 5b, 5c, 6b, 6c) verschiebbar geführt ist und ferner bei bestimmten Betriebszuständen der Wasserrinnenmechanik (4c, 5a, 5b, 5c, 6b, 6c) als ein erstes, insbesondere das erste Schwenkgelenk für die Wasserrinne (5) wirkt.

7. Fahrzeug-Schiebedach nach Anspruch 6, **dadurch gekennzeichnet, dass** die Wasserrinnenmechanik (4c, 5a, 5b, 5c, 6b, 6c) mit einem zweiten an der Wasserrinne (5) angeordneten Nocken (5b) gestaltet ist, der in einer zugehörigen zweiten Kulisse (6b) der Wasserrinnenmechanik (4c, 5a, 5b, 5c, 6b, 6c) verschiebbar geführt ist und als eine Führung der Wasserrinne (5) wirkt, wenn die Wasserrinne (5) in der ersten Kulisse (6c) verschoben wird.

8. Fahrzeug-Schiebedach nach Anspruch 7, **dadurch gekennzeichnet, dass** die zweite Kulisse (6b) nach oben offen gestaltet ist, derart, dass der zweite Nocken (5b) aus dieser austreten kann, während die Wasserrinne (5) um den als erstes Schwenkgelenk wirkenden ersten Nocken (5c) geschwenkt wird.

9. Fahrzeug-Schiebedach nach einem der Ansprüche 1 bis 8, **dadurch gekennzeichnet, dass** die Wasserrinnenmechanik (4c, 5a, 5b, 5c, 6b, 6c) mit einem, insbesondere dritten an der Wasserrinne (5) angeordneten Nocken (5a) gestaltet ist, der in einer, insbesondere dritten Kulisse (4c) der Wasserrinnenmechanik (4c, 5a, 5b, 5c, 6b, 6c) verschiebbar geführt ist und ferner bei bestimmten Betriebszuständen der Wasserrinnenmechanik (4c, 5a, 5b, 5c, 6b, 6c) als ein zweites, insbesondere das zweite Schwenkgelenk für die Wasserrinne (5) wirkt.

10. Fahrzeug-Schiebedach nach einem der Ansprüche 1 bis 9, **dadurch gekennzeichnet, dass** ein Kulissenhebel (4) vorgesehen ist, mit dem die Bewegung der Wasserrinne (5) angetrieben oder geleitet wird, und ein Federelement (8) vorgesehen ist, mit dem bei einem Bewegen der Wasserrinne (5) diese relativ zum Kulissenhebel (4) federnd vorgespannt ist.

## Claims

1. A sliding roof for a vehicle with a sliding roof cover (10), which can be moved from a closed position into a lowered open position displaced to the rear, viewed in the direction of travel, and with a movable water gutter (5), which is arranged at the rear edge of the sliding roof cover (10), the movement of which water gutter is guided by a water gutter mechanism, **characterised in that** the water gutter mechanism (4c, 5a, 5b, 5c, 6b, 6c) is configured in such a way that when lowering the sliding roof cover (10), the water gutter (5) is displaced forward relative to the sliding roof cover (10) in the direction of travel, and **in that** the water gutter mechanism (4c, 5a, 5b, 5c, 6b, 6c) is configured with a guide (6b, 6c) which is arranged inclined in the direction of travel to displace the water gutter (5) forward in the direction of travel relative to the sliding roof cover (10), with which guide the water gutter (5) is moved downward and forward when the sliding roof cover (10) is lowered.

2. A sliding roof for a vehicle according to claim 1 , **characterised in that** the water gutter mechanism (4c, 5a, 5b, 5c, 6b, 6c) is configured at at least one of the sides of the water gutter (5) with a parallel guide (5b, 5c, 6b, 6c) to displace the water gutter (5) forward in the direction of travel relative to the sliding roof cover (10), with which parallel guide the water gutter (5) can be moved substantially in parallel downward and simultaneous forward when the sliding roof cover (10) is lowered.

3. A sliding roof for a vehicle according to claim 1 or 2, with a sliding roof cover (10) which can be moved from a closed position into a lowered open position which is displaced to the rear, viewed in the direction of travel, or can additionally be moved into a raised ventilator position, and with a movable water gutter (5) arranged at the rear edge of the sliding roof cover (10), the movement of which water gutter (5) is guided by a water gutter mechanism, **characterised in that** the water gutter mechanism (4c, 5a, 5b, 5c, 6b, 6c) is configured with a pivoting joint (5c) for the water gutter (5), the rotational axis of which, viewed in the direction of travel, is arranged between the front and rear edge of the water gutter (5).

4. A sliding roof for a vehicle according to any one of claims 1 to 3, with a movable water gutter (5) arranged at the rear edge of the sliding roof cover (10), the movement of which water gutter is guided by a water gutter mechanism, **characterised in that** the water gutter mechanism (4c, 5a, 5b, 5c, 6b, 6c) is configured with a first pivoting joint (5c) for the water gutter (5), which is displaceably mounted (6c) on the associated vehicle roof and can be displaced downward when the sliding roof cover (10) is lowered.

5. A sliding roof for a vehicle according to any one of claims 1 to 4, with a movable water gutter (5) arranged at the rear edge of the sliding roof cover (10), the movement of which water gutter is guided by a water gutter mechanism, **characterised in that** the water gutter mechanism (4c, 5a, 5b, 5c, 6b, 6c) is configured with a second pivoting joint (5a) for the water gutter (5), which is displaceably mounted (4c) on the sliding roof cover (10) and when the sliding roof cover (10) is moved in the direction of its open position, can be displaced forward relative to the sliding roof cover (10).

6. A sliding roof for a vehicle according to any one of claims 1 to 5, **characterised in that** the water gutter mechanism (4c, 5a, 5b, 5c, 6b, 6c) is configured with a first cam (5c) arranged on the water gutter (5), which cam is displaceably guided in an associated first connecting link (6c) of the water gutter mechanism (4c, 5a, 5b, 5c, 6b, 6c) and in specific operating states of the water gutter mechanism (4c, 5a, 5b, 5c, 6b, 6c), also acts as a first, in particular the first pivoting joint for the water gutter (5).

7. A sliding roof for a vehicle according to claim 6, **characterised in that** the water gutter mechanism (4c, 5a, 5b, 5c, 6b, 6c) is configured with a second cam (5b) arranged on the water gutter (5), which is displaceably guided in an associated second connecting link (6b) of the water gutter mechanism (4c, 5a, 5b, 5c, 6b, 6c) and acts as a guide of the water gutter (5) when the water gutter (5) is displaced in the first connecting link (6c).

8. A sliding roof for a vehicle according to claim 7, **characterised in that** the second connecting link (6b) is configured open at the top in such a way that the second cam (5b) can exit therefrom while the water gutter (5) is pivoted about the first cam (5c) acting as the first pivoting joint.

9. A sliding roof for a vehicle according to any one of claims 1 to 8, **characterised in that** the water gutter mechanism (4c, 5a, 5b, 5c, 6b, 6c), is configured with, in particular, third cam (5a) arranged on the water gutter (5), which is displaceably guided in an, in particular, third connecting link (4c) of the water gutter mechanism (4c, 5a, 5b, 5c, 6b, 6c) and in specific operating states of the water gutter mechanism (4c, 5a, 5b, 5c, 6b, 6c) also acts as a second, in particular the second, pivoting joint for the water gutter (5).

10. A sliding roof for a vehicle according to any one of claims 1 to 9, **characterised in that** a connecting link lever (4) is provided with which the movement of the water gutter (5) is driven or guided, and a spring element (8) is provided with which, upon a movement of the water gutter (5), the latter is resiliently preloaded relative to the connecting link lever (4).

## Revendications

1. Toit ouvrant de véhicule automobile comportant un panneau coulissant de toit ouvrant (10) mobile à partir d'une position fermée dans une position ouverte, abaissée, coulissée vers l'arrière dans le sens de déplacement du véhicule, ainsi qu'une gouttière (5) prévue au bord arrière du panneau coulissant (10) de toit ouvrant, cette gouttière étant mobile et son mouvement est guidé par un mécanisme de gouttière,
toit ouvrant **caractérisé en ce que**
le mécanisme de gouttière (4c, 5a, 5b, 5c, 6b, 6c) est conçu pour que :
- la gouttière (5) est déplacée vers l'avant dans le sens de déplacement du véhicule par rapport au panneau coulissant (10), lorsqu'on abaisse le panneau coulissant de toit ouvrant (10), et
- le mécanisme de gouttière (4c, 5a, 5b, 5c, 6b, 6c), est conçu pour déplacer la gouttière (5) par rapport au panneau coulissant de toit ouvrant (10), dans la direction de déplacement du véhicule, vers l'avant, avec un guidage (6b, 6c) incliné dans la direction de déplacement du véhicule, guidage par lequel, la gouttière (5) est déplacée vers le bas et vers l'avant, lorsqu'on abaisse le panneau coulissant de toit ouvrant (10).

2. Toit ouvrant de véhicule automobile selon la revendication 1,
**caractérisé en ce que**
le mécanisme de gouttière (4c, 5a, 5b, 5c, 6b, 6c) pour déplacer la gouttière (5) par rapport au panneau coulissant de toit ouvrant (10) vers l'avant, est formé d'au moins un guidage parallèle (5b, 5c, 6b, 6c) pour les côtés de la gouttière (5), permettant de faire descendre et en même temps d'avancer d'une manière pratiquement parallèle, la gouttière (5) lorsqu'on abaisse le panneau coulissant de toit ouvrant (10).

3. Toit ouvrant de véhicule automobile selon la revendication 1 ou 2, comportant un panneau coulissant de toit ouvrant (10) mobile à partir d'une position fermée dans une position ouverte, abaissée et coulissée vers l'arrière dans le sens de déplacement du véhicule ou qui, en plus, peut être déplacé dans une position relevée de ventilation, ainsi qu'une gouttière (5), mobile, installée au bord arrière du panneau coulissant de toit ouvrant (10), dont le mouvement est guidé par un mécanisme de gouttière,
**caractérisé en ce que**
le mécanisme de gouttière (4c, 5a, 5b, 5c, 6b, 6c) comporte une articulation de pivotement (5c) pour la gouttière (5), dont l'axe de rotation selon le sens de déplacement du véhicule, se situe entre le bord avant et le bord arrière de la gouttière (5).

4. Toit ouvrant de véhicule automobile selon l'une des revendications 1 à 3, comportant une gouttière mobile installée au bord arrière du panneau coulissant de toit ouvrant (10), dont le mouvement est guidé par un mécanisme de gouttière,
**caractérisé en ce que**
le mécanisme de gouttière (4c, 5a, 5b, 5c, 6b, 6c), comporte une première articulation de pivotement (5c) pour la gouttière (5), cette articulation étant montée coulissante (6c) sur le toit du véhicule et elle est coulissée vers le bas lors de l'abaissement du panneau coulissant de toit ouvrant (10).

5. Toit ouvrant de véhicule automobile selon l'une des revendications 1 à 4, comportant une gouttière (5), mobile installée au niveau du bord arrière du panneau coulissant de toit ouvrant (10), dont le mouvement est guidé par un mécanisme de gouttière,
**caractérisé en ce que**
le mécanisme de gouttière (4c, 5a, 5b, 5c, 6b, 6c), comporte une seconde articulation de pivotement (5a) pour la gouttière (5) et qui est montée coulissante (4c) sur le panneau coulissant de toit ouvrant (10), et lors du mouvement du panneau coulissant de toit ouvrant (10) en direction de sa position d'ouverture, cette articulation est coulissée vers l'avant par rapport au panneau coulissant de toit ouvrant (10).

6. Toit ouvrant de véhicule automobile selon l'une des revendications 1 à 5,
**caractérisé en ce que**
le mécanisme de gouttière (4c, 5a, 5b, 5c, 6b, 6c), comporte une première came (5c) prévue sur la gouttière (5), cette came étant guidée en coulissement dans une première coulisse (6c) correspondante du mécanisme de gouttière (4c, 5a, 5b, 5c, 6b, 6c) et, en outre, pour certains états de fonctionnement du mécanisme de gouttière (4c, 5a, 5b, 5c, 6b, 6c), il coopère comme une première et notamment la première articulation de pivotement de la gouttière (5).

7. Toit ouvrant de véhicule automobile selon la revendication 6,
**caractérisé en ce que**
le mécanisme de gouttière (4c, 5a, 5b, 5c, 6b, 6c), comporte une seconde came (5b) prévue sur la gouttière (5), cette seconde came étant guidée en coulissement dans une seconde coulisse (6b) correspondante du mécanisme de gouttière (4c, 5a, 5b, 5c, 6b, 6c), et fonctionne comme moyen de guidage de la gouttière (5), lorsque la gouttière (5) est déplacée dans la première coulisse (6c).

8. Toit ouvrant de véhicule automobile selon la revendication 7,
**caractérisé en ce que**
la seconde coulisse (6b) a une forme ouverte vers le haut, de façon que la seconde came (5b) puisse en sortir pendant que la gouttière (5) est pivotée autour de la première came (5c) fonctionnant comme première articulation de pivotement.

9. Toit ouvrant de véhicule automobile selon l'une des revendications 1 à 8,
**caractérisé en ce que**
le mécanisme de gouttière (4c, 5a, 5b, 5c, 6b, 6c), comporte une, et notamment une troisième came (5a) sur la gouttière (5), guidée en coulissement dans une, et notamment une troisième coulisse (4c) du mécanisme de gouttière (4c, 5a, 5b, 5c, 6b, 6c) et, en outre, elle fonctionne pour certains états de fonctionnement du mécanisme de gouttière (4c, 5a, 5b, 5c, 6b, 6c), comme seconde, et notamment la seconde articulation de pivotement de la gouttière (5).

10. Toit ouvrant de véhicule automobile selon l'une des revendications 1 à 9,
**caractérisé par**
un levier de coulisse (4) entraînant et guidant le mouvement de la gouttière (5), et un élément de ressort (8) prévu pour précontraindre de manière élastique, le mouvement de la gouttière (5) par rapport à ce levier de coulisse (4).
